Europäisches Patentamt

European Patent Office

Office européen des brevets

(19)

(11) Publication number: **0 439 876 A1**

# EUROPEAN PATENT APPLICATION

(12)

(21) Application number: 90300896.9

(22) Date of filing: 29.01.90

(51) Int. Cl.⁵: **G11B 7/09**, G11B 7/135, G11B 11/10

The title of the invention has been amended (Guidelines for Examination in the EPO, A-III, 7.3).

(43) Date of publication of application:
**07.08.91 Bulletin 91/32**

(84) Designated Contracting States:
**FR GB NL**

(71) Applicant: **Hitachi Maxell Ltd.**
**No 1-1-88, Ushitora Ibaraki-shi**
**Osaka-fu(JP)**

(72) Inventor: **Watanabe, Hitoshi**
**1468-5 Furumagi, Ishigemachi**
**Yuki-gun, Ibaraki-ken(JP)**
Inventor: **Sugiyama, Toshinori**
**1296-1 Tanaka**
**Tsukuba-shi(JP)**

(74) Representative: **Williams, Trevor John et al**
**J.A. KEMP & CO. 14 South Square Gray's Inn**
**London WC1R 5EU(GB)**

(54) **Optical head with a double-beam splitter.**

(57) An optical recording medium driving apparatus is disclosed which comprises a light source (1), an objective lens (6) for focusing light onto a reflecting surface (11a) of the recording medium, a beam splitter (41) for separating reflective convergent beam, and detectors (9, 10) for detecting separated beams of the reflective convergent beam flux. Two beam separation surfaces (41a,41b) are formed in the beam splitter and are located on an optical path extending from the light source to the objective lens. The two detectors are arranged corresponding to the respective beam separation surfaces of the beam splitter. The two detector are disposed so that one of the two separated beams of the reflective convergent beam flux is focused before one of the detectors and the other of the two separated beams is focused after the other of the detectors.

**F I G. I**

## DEVICE FOR DRIVING AN OPTICAL RECORDING MEDIUM

BACKGROUND OF THE INVENTION

Field of the Invention

The present invention relates to an optical pickup equipped in an optical recording medium driving apparatus.

Description of the Prior Art

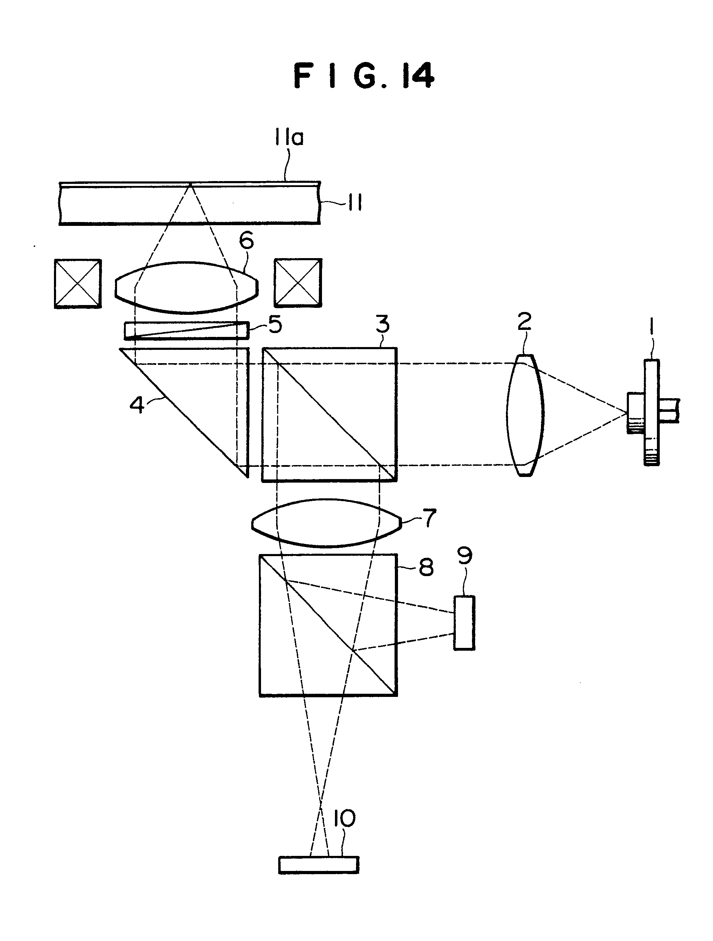

Fig. 14 shows an example of a well known optical pickup of this type (Japanese Patent Unexamined Publication No. 61-59630).

As shown in Fig. 14, the optical pickup includes a light source 1 for irradiating linear polarization beam, a collimator lens 2, a beam splitter 3, an upwardly reflecting mirror 4, a 1/4 wavelength plate 5, an objective lens 6, a focusing lens 7, a half reflective mirror (hereinafter referred to a half mirror) 8, and two detectors 9 and 10.

The linear polarization beam (p-polarization) emitted from the light source 1 is rectified into a parallel light beam flux by the collimator lens 2. After the parallel light flux has passed through the beam splitter 3, the optical path is curved in a direction vertical to a recording surface 11a of an optical medium 11. The parallel optical flux reflected by the upwardly reflecting mirror 4 is converted into a circular beam by a 1/4 wavelength plate 5 and is focused on the recording surface 11a of the optical recording medium 11 through the objective lens.

The reflected light from the recording surface 11a is returned back to the beam splitter 3 through the objective lens 6, the 1/4 wavelength plate 5 and the upwardly reflecting mirror 4. The reflected light is converted into a linear polarization beam (s-polarization) when the reflected light has passed through the 1/4 wavelength plate 5. Since the beam splitter has a function to pass the p-polarization light but to reflect the s-polarization light, the optical path of the reflected light returned back to the beam splitter 3 is curved toward a converging or focusing lens 7. The reflected light converged by the converging lens 7 is split into two beams which will be introduced into the two detectors 9 and 10 disposed in the respective optical paths, respectively.

Accordingly, it is possible to read out a signal according to a change of the reflective optical intensity of the beams introduced into the two detectors 9 and 10. Also, it is possible to pick up a desired servo signal.

The optical pickup equipped with the above-described optical system has the following characteristics. Since the collimator lens 2 is interposed between the light source 1 and the beam splitter 3, an astigmatism is hardly generated. It is also possible to readily obtain a circular optical spot by disposing the beam rectifying prism or the like in the optical path from the collimator lens 2 to the objective lens 6.

However, in the pickup provided with the above-described optical system, since the collimator lens 2 is interposed between the light source 1 and the beam splitter 3 so as to introduce the parallel beam flux into the objective lens 6, the reflective optical system needs the focusing lens 7 and the half mirror 8. In addition, the focusing lens 7 and the half mirror 8 must be disposed perpendicularly to the incidental optical system. Moreover, the detectors 9 and 10 must be disposed in the two optical paths divided in the perpendicular directions to each other by the half mirror 7. Thus, there is a problem that the apparatus is made large in size.

SUMMARY OF THE INVENTION

Accordingly, in order to overcome the above-noted defects, an object of the invention is to provide a small-size optical recording medium driving apparatus.

In order to attain the above-described and other objects, according to the present invention, there is provided an optical recording medium driving apparatus which is characterized in that two beam-separation surfaces of a beam splitter are formed in an optical path of a divergent beam flex from a light source to an objective lens; and two detectors are disposed corresponding to the respective beam separation surfaces of the beam splitter so that a first one of the two separated beam fluxes of the convergent reflective beam from reflective surface of a recording layer in the recording medium is focused at a position before the associated one of the two detectors, whereas a second one of the separated beam flux is focused converged toward a position behind a second one of the two detectors, the two detectors disposed to receive substantially some intensity of beam fluxes with each other.

With such an arrangement, when divergent light beam flux is introduced into the objective lens through the composite beam splitter, the reflective light returned back to the beam splitter becomes convergent beam. It is therefore possible to dispense with any focusing lens in the reflective optical system. Also, since the composite beam splitter having the two beam separation surfaces is disposed in the optical path of a divergent beam flux from the light source to the objective lens. It is possible to pick up signals from the respective beam separation surfaces without provision of any discrete half mirror. Thus, it is possible to reduce the number of the optical components.

Furthermore, since the focusing lens and the half mirror may be dispensed with, it is possible to shorten the reflective optical path from the composite beam splitter to the detectors to a minimum extent.

As described above, it will be understood that it is possible to miniaturize the optical system and hence the optical recording medium driving apparatus in low cost.

## BRIEF DESCRIPTION OF THE DRAWINGS

The above-described cbjects, features and advantages and others of the present invention will become more apparent when reading the following description in conjunction with the accompanying drawings in which:

Fig. 1 is an optical circuit of an optical pickup in accordance with a first embodiment of the invention;

Fig. 2 is an exploded perspective view showing an overall optical disc driving apparatus for the optical pickup shown in Fig. 1;

Figs. 3 and 4 are illustrations of signal detecting systems used in the apparatus shown in Fig. 2;

Figs. 5 through 12 are illustrations of optical pickups according other embodiments of the invention;

Fig. 13 is an illustration of another signal detecting system according to the present invention;

Fig. 14 is an optical circuit showing one example of a conventional optical pickup.

## DESCRIPTION OF THE PREFERRED EMBODIMENTS

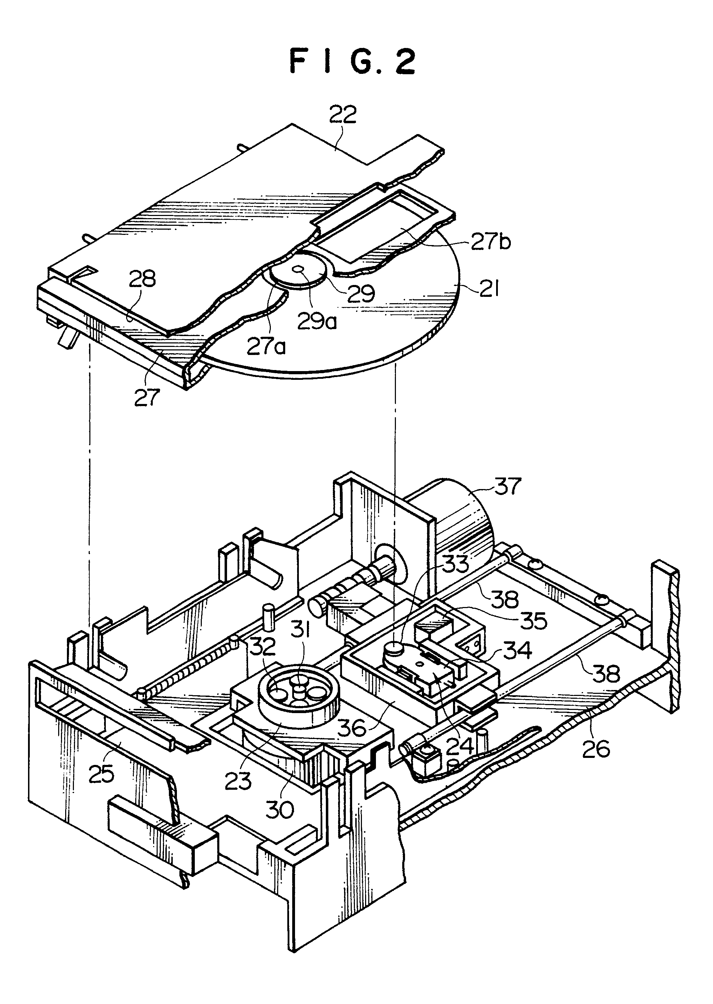

An overall system of an optical medium driving apparatus according to the invention will be explained in conjunction with an optical disc driving apparatus shown in Fig. 2.

As shown in Fig. 2, the optical disc driver includes a housing case 22 for holding therein an optical disc 21 which is a signal recording medium, a turntable 23 for drivingly rotating the optical disc 21, and an optical pickup 24 for projecting a light beam against the optical disc 21 and detecting the reflective light thereof. These components 21 to 24 are mounted on a base body 26 having a disc cartridge insertion hole 25 in its front face.

The housing case 22 is substantially in the form of a box into which insertable is a disc cartridge 27 rotatably receiving the optical disc 21. An opening 28 is formed in the housing case 22 in a position corresponding to the disc cartridge insertion hole 25.

The disc cartridge 27 has a through hole 27a and a head insertion hole 27b. A hub 29 is fixed to a central portion of the optical disc 21 and is exposed to the outside through the through hole 27a.

In a surface, facing the optical pickup 24, of the through hole 27a and the head insertion hole 27b of the housing case 22, there is formed a window hole (not shown) having substantially the same configuration as that of the through hole 27a and the head insertion hole 27b. The housing case 22 is mounted movably up and down in an upper portion of the base body 26. When the housing case 22 is located at the uppermost position, the opening 28 is aligned with the disc cartridge insertion hole 25, whereas when the housing case 22 is located at the lowermost position, the optical disc 21 is located on the turntable 23 as described later.

A spindle 31 coupled to a motor 30 is projected through an upper surface of the turntable 23. A plurality of magnets 32 are mounted around the spindle 31 for clamping the optical disc 21.

The optical pickup 24 is composed of an objective lens 33, a swing arm 34, a upwardly reflecting mirror 35, and other various optical components (not shown) that are needed to write a signal onto the optical disc 21 and to read out the signal recorded on the optical disc 21. The optical pickup 24 is mounted on a carriage 36 and is moved by a motor 37. More specifically, the carriage 36 is movably mounted on a pair of guide rails 38 arranged in parallel to each other. The driving rotation of the motor 37 causes the objective lens 33 to move in the radial direction of the optical disc 21 by a distance in proportion to the angular movement of the motor 37.

The optical disc driving apparatus will operate as follows. When the disc cartridge 27 is inserted to a predetermined position within the housing case 22, the housing case 22 is moved downwardly by a loading means (not shown) with the spindle 31 being inserted into a center hole 29a of the hun 29 mounted on the optical disc 21, thereby performing the centering operation of the optical disc 21. Also, at the same time, the magnets 32 mounted on the turntable 23 are operated to magnetically attract the hub 29 mounted on the central portion of the optical disc 21, thus performing the clamping operation of the optical disc 21.

When the turntable 23 is rotated to drive the optical disc 21 from the above-described condition so that an address to be accessed is assigned by a control means (not shown), the motor 37 is driven to move the optical pickup 24 along the guide rails 38. As a result, the objective lens 33 is roughly tracked to the assigned address. Thereafter, the swing arm 34 is driven to thereby perform a fine tracking operation.

Thus, it is possible to perform the recording/reproducing operation based upon the command signal of the control means (not shown).

The present invention is directed to the structure of the above-described optical pickup 24.

The optical pickup according to the invention will hereinafter be described in more detail.

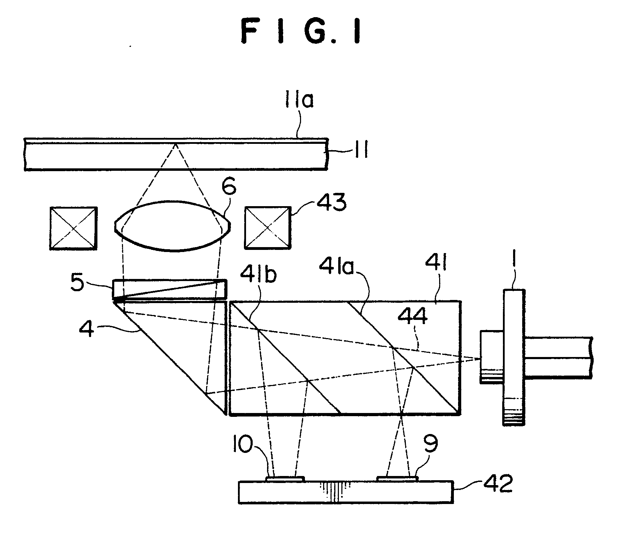

Fig. 1 shows an optical circuit for an optical pickup in accordance with a first embodiment of the invention. The optical pickup includes a composition beam splitter 41, a detector base 42, and a focus actuator 43 for an objective lens 6. In Fig. 1, the same reference numerals as those in Fig. 14 are used to indicate the like components or members.

As shown in Fig. 1, in the optical pickup according to the first embodiment, there are arranged the composite beam splitter 41, the upwardly reflecting mirror 4, and the 1/4 wavelength plate 5 in the order from the light source 1 in the optical path of divergent beam flux from the light source 1 to the objective lens 6. Two detectors 9 and 10 are juxtaposed on one side of the composite beam splitter 41.

A means for emitting a coherent light such as a semiconductor laser source is used as the light source 1.

The composite beam splitter 41 has two light separation surfaces 41a and 41b which are different from each other in light separation property. The first light separation surface 41a, disposed in close proximity to the light source 1, of the two light separation surfaces 41a and 41b is made of a reflecting film in which transparency for p-polarization beam is 100% and reflectivity for s-polarization beam is 100%. On the other hand, the second light separation surface 41b disposed in close proximity to the upwardly reflecting mirror 5 is made of a reflecting film in which transparency for p-polarization beam is 100% and reflectivity for s-polarization beam is 50%.

The detectors 9 and 10 are juxtaposed on the detector plate 42. A first convergent beam from the first beam separation surface 41a is focused to a point before the first detector 9 and introduced into the first detector 9 in the form of divergent beam, whereas a second beam from the second beam separation surface 41b which is converged to a point behind the second detector 10 is introduced into the second detector 10.

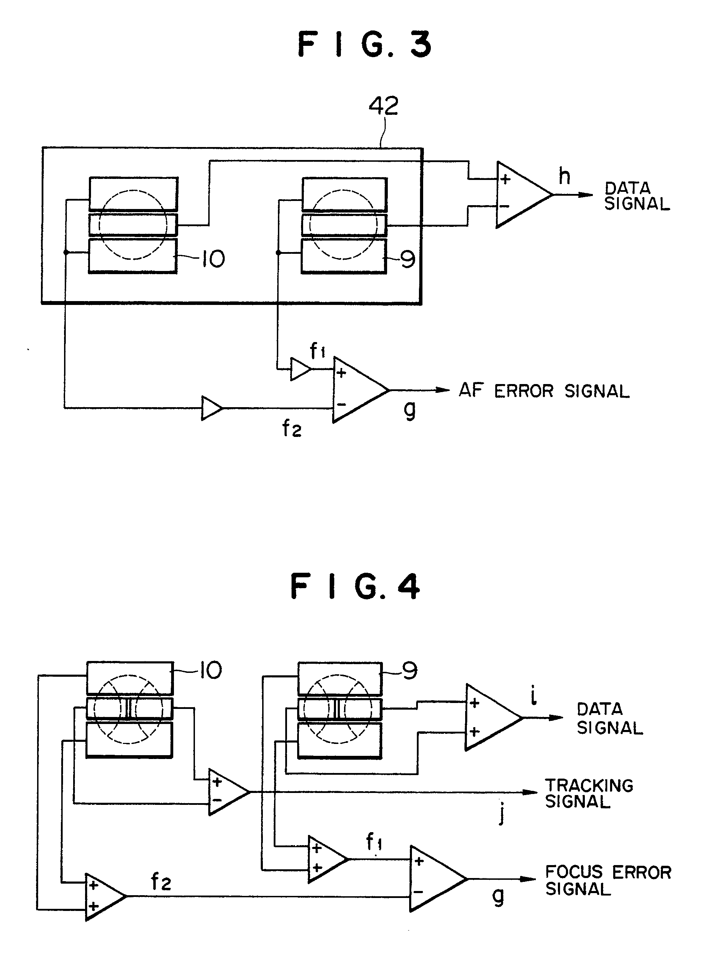

Fig. 3 shows a first example of the detector structure, in which so-called prewove ring pits are formed in the optical recording medium, and no means for detecting the tracking signal is formed in the detectors.

As shown in Fig. 3, each of the detectors 9 and 10 is divided into three parts. A differential signal g of addition signals f1 and f2 of outer parts of the respective detectors 9 and 10 is picked up to thereby obtain a forcus error. In accordance with this focus error signal, the focus actuator 43 is driven. Also, a differential signal h of central parts of the respective detectors 9 and 10 to thereby obtain a data signal.

Fig. 4 shows a second example of the detector structure, in which so-called pregrooves are formed in the optical recording medium and tracking signals read out from the pregrooves are detected by the detectors.

As shown in Fig. 4, each of the detectors 9 and 10 is divided into four parts. A differential signal g of addition signals f1 and f2 of the outer parts of the respective detectors 9 and 10 is picked up to thereby obtain a focus error signal. Also, an addition signal i of the central parts of the first detector 9 to obtain a data signal. Further, an addition signal j of central parts of the second detector 10 is picked up to thereby obtain a tracking signal.

In the optical pickup according to the first embodiment, since any collimator lens is not interposed between the light source 1 and the composite beam splitter 41, the divergent beam flux 44 is directly introduced from the light source 1 into the composite beam splitter 41.

The divergent beam flux 44 emitted from the composite beam splitter 41 is curved in a direction perpendicular to the recording surface 11a of the optical recording medium 11 by the upwardly reflecting mirror 4. The beam 44 is converted into a circular polarization beam by the 1/4 wavelength plate 5 and is focused onto the recording surface 11a of the optical recording medium 11 through the objective lens 6.

The reflective beam from the recording surface 11a is returned back to the composite beam splitter 41 through the objective lens 6, the 1/4 wavelength plate 5 and the upwardly reflecting mirror 4. The resultant reflective light is converted into a linear polarization beam (s-polarization) when it has passed through the 1/4 wavelength plate 5. Since the second beam separation surface 41, arranged closer to the upwardly reflecting mirror 4, of the two beam separation surfaces formed in the composite beam splitter 41 is adjusted so that its reflectivity for s-polarization is at 50%, approximately 50% of the reflective beam is introduced into the second detector 10. On the other hand, the reflective beam (s-polarization) transparent through the second beam separation surface 41b is reflected by the first beam separation surface 41a arranged closer to the light source and is introduced into the first detector 9. Thus, the data signal, automatic focus signal and tracking signal may be detected (see Figs. 3 and 4).

In the optical pickup according to the first embodiment, since the divergent beam flux is introduced into the objective lens 6 through the composite beam splitter 41, the reflective beam returned back to the composite beam splitter 41 is convergent so that any convergent lens may be dispensed with in the reflective optical system.

Also, since the two beam separation surfaces 41a and 41b having different beam separation properties are arranged in the optical path from the light source 1 to the objective lens 6, it is possible to pick up necessary signals by using the reflective beam fluxes of the respective beam separation surfaces 41a and 41b. Thus, a half-transparent mirror may be dispensed with.

Accordingly, it is possible to reduce the number of the optical components. At the same time, it is possible to reduce the optical path from the composite beam splitter 41 to the detectors 9 and 10, thereby miniaturizing the optical pickup.

Also, since the directions of the two beam separation surfaces 41a and 41b formed in the beam splitter 41 are parallel to each other, it is possible to identify the directions of the reflected lights from the composite beam splitter 41 with each other. Thus, it is possible to compose the two detectors on the single base plate 42.

It is therefore possible to collectively form the structural components, which also leads to the miniaturization of the optical pickup.

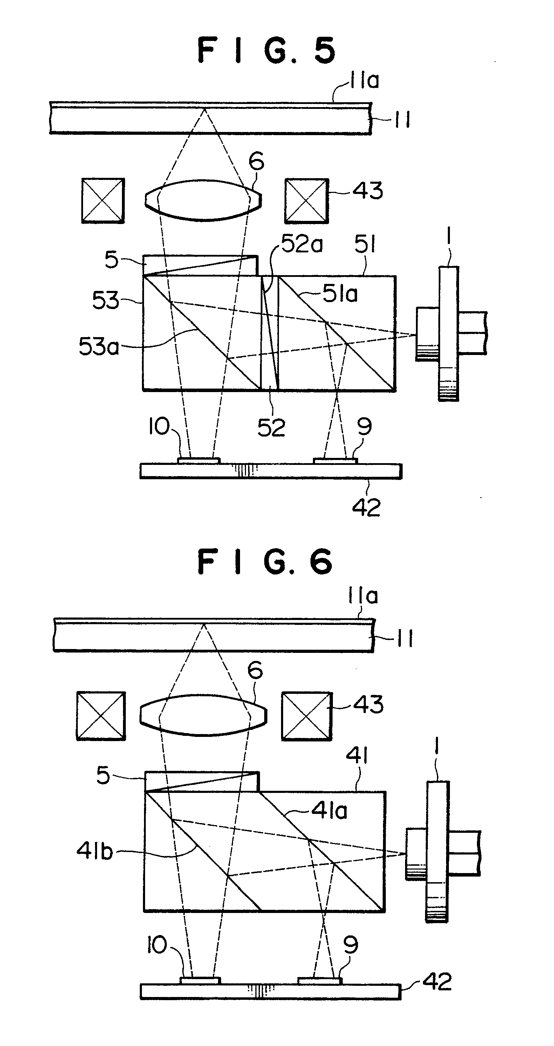

A second embodiment of the invention will now be described with reference to Fig. 5, in which the same reference numerals as those used in Fig. 1 are also used to indicate the like components or members.

The optical pickup according to the second embodiment is composed of a first beam splitter 51, a 1/2 wavelength plate 52, a second beam splitter 53 and a 1/4 wavelength plate 5 in order from the light source 1 on the optical path of a divergent beam flux extending from the light source 1 to the objective lens 6 as shown in Fig. 5. The first beam splitter 51, the 1/2 wavelength plate 52 and the second beam splitter 53 may be integrally cemented together but may be formed in discrete components. Also, the 1/4 wavelength plate 5 may be cemented to these components but may be formed in a discrete component.

The beam separation surface 51a of the first beam splitter 51 is made of a reflecting film in which the transparency for p-polarization is 100% and the reflectivity for s-polarization is 100%. The beam separation surface 52a of the second beam splitter 52 is made of a reflecting film in which the transparency for p-polarization is 50% and the reflectivity for s-polarization is 100%. The two beam separation surfaces 51a and 52a are in parallel to each other and are inclined at an angle of 45 degrees with respect to the optical axis.

The explanation for the other components will be omitted because these components are the same as those according to the first embodiment.

In the optical pickup according to the second embodiment, the divergent beam flux (p-polarization) emitted from the light source 1 is passed through the beam splitter 51. Thereafter, its polarization plate is rotated to form the s-polarization by the 1/2 wavelength plate 52. The beam is introduced into the second beam splitter 53. In the second beam splitter 53, the optical path of the s-polarization beam is deflected toward the 1/4 wavelength plate 5. The beam is converted into a circular polarization beam by the 1/4 wavelength plate 5 and is focused on the recording surface 11a of the optical recording medium 11 through the objective lens 6.

The reflective light from the recording surface 11a is returned back to the second beam splitter 53 through the objective lens 6 and 1/4 wavelength plate 5. The reflective light is converted into a linear polarization beam (p-polarization) when the beam passes through the 1/4 wavelength plate 5. Since the reflectivity for p-polarization in the beam separation surface 53a of the second beam splitter 53 is adjusted to 50%, approximately 50% of the reflective beam is introduced into the second detector 10. On the other hand, the reflective light reflected at the beam separation surface 53a of the second beam splitter 53 is converted into a s-polarization beam through the 1/2 wavelength plate 52 and is introduced into the first beam splitter 51. Since the reflectivity for s-polarization in the beam separation surface 51a of the first beam splitter is set at 100%, the reflective beam that has passed through the second beam splitter 53 is reflected at the beam separation surface 51a of the first beam splitter 51 and is introduced into the first detector 9.

It is thus possible to detect the data signal, the automatic focus signal and the tracking signal (see Figs. 3 and 4).

In the optical pickup according to the second embodiment, the 1/2 wavelength plate 52 must be provided in addition to the system of the first embodiment but the upwardly reflecting mirror 4 may be dispensed with. This is advantageous for miniaturization of the system.

A third embodiment of the invention will now be described with reference to Fig. 6 in which the same reference numerals as those shown in Fig. 1 are used to indicate the like components or members.

The optical pickup according to the third embodiment is composed of a composite beam splitter 41, and a 1/4 wavelength plate 5 in order from the light source 1 on the optical path extending from the light source 1 to the objective lens 6 as shown in Fig. 6. Detectors 9 and 10 are disposed on one side of the composite beam splitter 41. The composite beam splitter 41 and the 1/4 wavelength plate 5 are cemented together.

The first beam separation surface 41a arranged closer to the light source 1 is made of a reflecting film in which the transparency for p-polarization is 100% and the reflectivity for s-polarization is 100%. The second beam separation surface 41b is made of a reflecting film in which the transparency for p-polarization is 50% and the reflectivity for s-polarization is 50%. The two beam separation surfaces 41a and 41a are formed in parallel to each other and are inclined at an angle of 45 degrees relative to the optical axis.

The explanation for the other components are the same as that for the first embodiment. Thus, the explanation will be omitted herein.

With such an arrangement, it is possible to read out the data signal, automatic focus signal and tracking signal.

In the optical pickup according to the third embodiment, the number of the optical components which are interposed between the light source 1 and the objective lens 5 is small, i.e., just two. This arrangement is very effective for reduction in weight and miniaturization of the system.

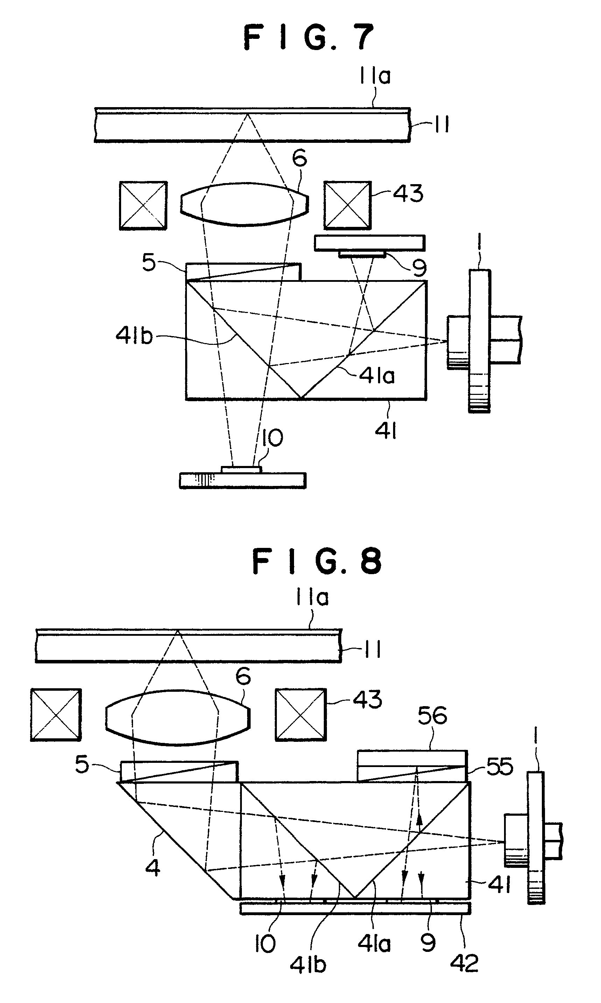

A fourth embodiment of the invention will now be described with reference to Fig. 7 in which the same reference numerals as those shown in Fig. 1 are used to indicate the like components or members.

In the same manner as in the fourth embodiment, the optical pickup according to the fourth embodiment is composed of a composite beam splitter 41 and a 1/4 wavelength plate 5 in order from the light source 1 on the optical path extending from the light source 1 to the objective lens 6.

As shown in Fig. 7, the first beam separation surface 41a disposed closer to the light source 1 and the second beam separation surface 41b disposed closer to the 1/4 wavelength plate 5 are perpendicular to each other. Two detectors 9 and 10 are arranged on reflective optical paths of the beam separation surfaces 41a and 41b, respectively.

The first beam separation surface 41a disposed closer to the light source 1 is made of a reflecting film in which the transparency for p-polarization is 100% and the reflectivity for s-polarization is 100%. The second beam separation surface 41b disposed closer to the 1/4 wavelength plate 5 is made of a reflecting film in which the transparency for p-polarization is 50% and the reflectivity for s-polarization is 50%.

The other components than the above-described ones are the same as those in the first embodiment and the explanation therefor will be omitted herein.

Also, with such an arrangement, it is possible to read out the data signal, automatic focus signal and tracking signal.

The optical pickup according to the fourth embodiment is particularly effective for reduction in weight and miniaturization of the system like the third embodiment.

A fifth embodiment of the invention will now be described with reference to Fig. 8, in which the same reference numerals as those used in Fig. 1 are used to indicate the like components or members.

As shown in Fig. 8, the optical pickup according to the fifth embodiment is composed of a composite beam splitter 41, an upwardly reflecting mirror 4 and a first 1/4 wavelength plate 5 in order from the light source 1 on the optical path extending from the light source 1 to the objective lens 6. In addition, a reflecting mirror 56 is disposed through a second 1/4 wavelength plate 55 on the reflective side of the composite beam splitter 41. Two detectors 9 and 10 are disposed on the side opposite the reflective mirror 56. These components 41, 4, 5, 55 and 56 are cemented in unison with each other.

A first beam separation surface 41a disposed closer to the light source 1 is made of a reflecting film in which the transparency for p-polarization is 100% and the reflectivity for s-polarization is 100%. A second beam separation surface 41b disposed closer to the upwardly reflecting mirror 4 is made of a reflecting film in which the transparency for p-polarization is 100% and the reflectivity for s-polarization is 50%. These two beam separation surfaces 41a and 41b are inclined at an angle of 45 degrees relative to the optical path and are perpendicular to each other.

The explanation for the other components are the same as that for the first embodiment and will be omitted herein.

In the optical pickup according to the fifth embodiment, the divergent beam flux (p-polarization) emitted from the light source 1 is passed through the composite beam splitter 41 and thereafter its optical path is deflected toward the 1/4 wavelength plate 5 by the upwardly reflecting mirror 4. The p-polarization beam is converted into a circular polarization beam by the 1/4 wavelength plate 5 and is focused on the recording surface 11a of the optical recording medium 11.

The reflective beam from the recording surface 11a is returned back to the composite beam splitter 41 through the objective lens 6, the first 1/4 wavelength plate 5 and the upwardly reflecting mirror 4. The reflective beam is converted into a linear polarization beam (s-polarization) when it has passed through the first 1/4 wavelength plate 5. Since the s-polarization reflectivity of the second beam splitter separation surface 41b, disposed closer to the upwardly reflecting mirror 4, of the two beam separation surfaces 41a and 41b formed in the composite beam splitter 41 is adjusted to 50%, approximately 50% of reflective beam is introduced into the detector 10.

On the other hand, the reflective beam (s-polarization) transparent through the second beam separation surface 41b is totally reflected at the first beam separation surface 41a since the first beam separation surface 41a is adjusted so as to reflect the s-polarization beam by 100%. Its optical path is reflected toward the reflective mirror 56. The reflective beam deflected toward the reflective mirror 56 is passed through the second 1/4 wavelength plate 55 and is converted into the p-polarization beam. The beam is then reflected toward the detector 9 by the reflective mirror 56. Since the first beam separation surface 41a is adjusted so as to pass the p-polarization beam by 100%, the reflective beam from the reflective mirror 56 is introduced into the first detector 9.

It is thus possible to read out the data signal, automatic focus signal and tracking signal with the above-described system (see Figs. 3 and 4).

In the optical pickup according to the fifth embodiment, the number of the optical parts is increased but the components except for the light source 1 and the objective lens 6 may be integrally formed. It is thus possible to make the system small in size in comparison with the conventional system.

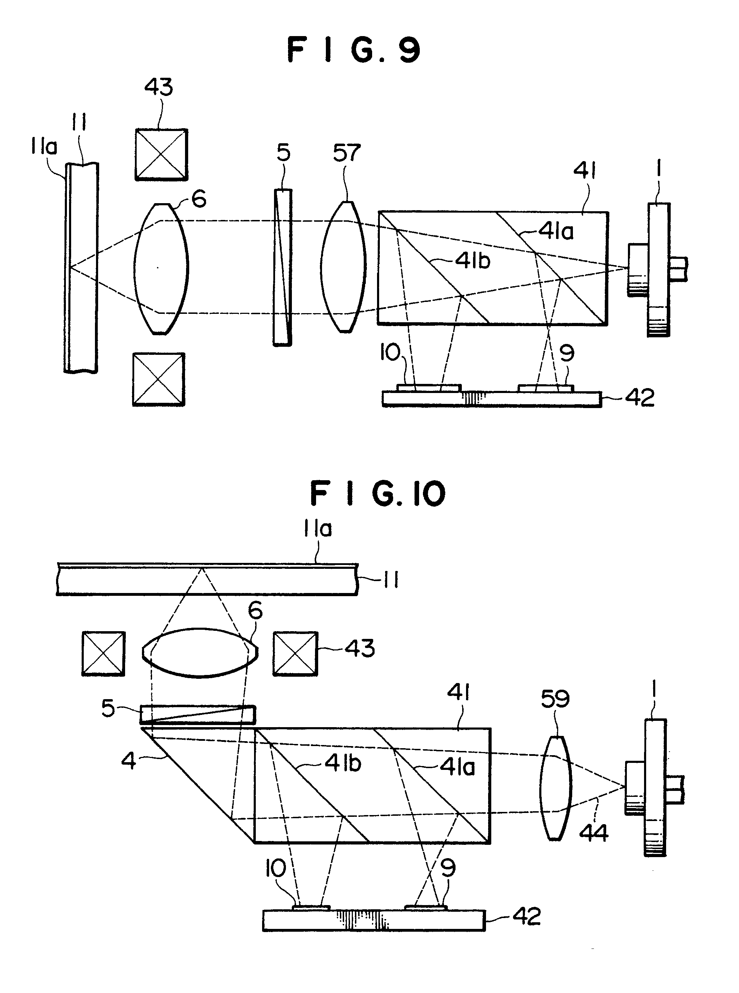

A sixth embodiment of the invention will now be described with reference to Fig. 9 in which the same reference numerals as those in Fig. 1 are used to indicate the like members of components.

As shown in Fig. 9, the optical pickup according to the sixth embodiment is composed of a composite beam splitter 41, a collimator lens 57, and a 1/4 wavelength plate 5 in order from the light source 1 on the optical path extending from the light source 1 to the objective lens 6. Two detectors 9 and 10 are arranged on one side of the composite beam splitter 41. A first beam separation surface 41a, disposed closer to the light source 1, of two beam separation surfaces 41a and 41b formed in the composite beam splitter 41 is made of a reflecting film in which the transparency for p-polarization is 100% and the reflectivity for s-polarization is 100%. A second beam separation surface 41b disposed closer to the collimator lens 57 is made of a reflecting film in which the transparency for p-polarization is 100% and the reflectivity for s-polarization is 50%. These two beam separation surfaces 41a and 41b are both inclined at an angle of 45 degrees relative to the optical axis and are in parallel with each other.

Because the other components are the same as those of the first embodiment, the explanation therefor will be omitted herein.

In the optical pickups according to the sixth embodiment, the divergent beam flux (p-polarization) emitted from the light source 1 is transmitted through the composite beam splitter 41, and thereafter is formed in a parallel beam flux by the collimator lens 57. The beam is converted into a circular polarization beam through the 1/4 wavelength plate 5 and is focused on the recording surface 11a of the optical recording medium 11.

The reflective beam from the recording surface 11a is returned back to the composite beam splitter 41 through the objective lens 6, the 1/4 wavelength plate 5 and the collimator lens 57. The beam returned back to the composite beam splitter 41 is formed in a convergent beam by the collimator lens 57. The reflective beam from the recording surface 11a is converted into a linear polarization beam (s-polarization) when it has passed through the 1/4 wavelength plate 5.

Since the second beam separation surface 41b, disposed closer to the collimator lens 57, of the two beam separation surfaces 41a and 41b formed in the composite beam splitter 41 is adjusted so that its reflectivity for s-polarization is at about 50%, approximately 50% of the reflective beam is introduced into the detector 10.

On the other hand, the reflective beam transparent through the second beam separation surface 41b is totally reflected at the first beam separation surface 41a is adjusted so that its s-polarization beam is reflected by 100%. Then, the beam is introduced into the first detector 9.

In the optical pickup according to the sixth embodiment, since the two detectors 9 and 10 may be disposed close to the composite beam splitter 41 and the two detectors 9 and 10 may be integrally formed with each other, it is possible to miniaturize the system in comparison with the conventional system.

A seventh embodiment of the invention will now be described with reference to Fig. 10 in which the same reference numerals as those shown in Fig. 1 are used to indicate the like members or components.

As shown in Fig. 10, the optical pickup according to the seventh embodiment is composed of a relay lens 59 for reducing the divergent angle of the emitted beam, a composite beam splitter 41, an upwardly reflecting mirror 5 and a 1/4 wavelength plate 6 in order from the light source 1 on the optical path extending from the light source 1 to the objective lens 6.

The explanation for the other components is the same as that for the first embodiment and will be omitted herein.

With such an arrangement, it is possible to reduce the divergent angle of the divergent beam flux introduced into the composite beam splitter 41 and the 1/4 wavelength plate 5, and it is also possible to decrease the aberration of the beam spot to be projected on the optical recording medium 11.

Also, it is possible to arrange the relay lens 59 after the 1/4 wavelength plate for reducing astigmatism. Moreover, the relay lens 59 may be provided in the optical pickup systems according to the second through sixth embodiments.

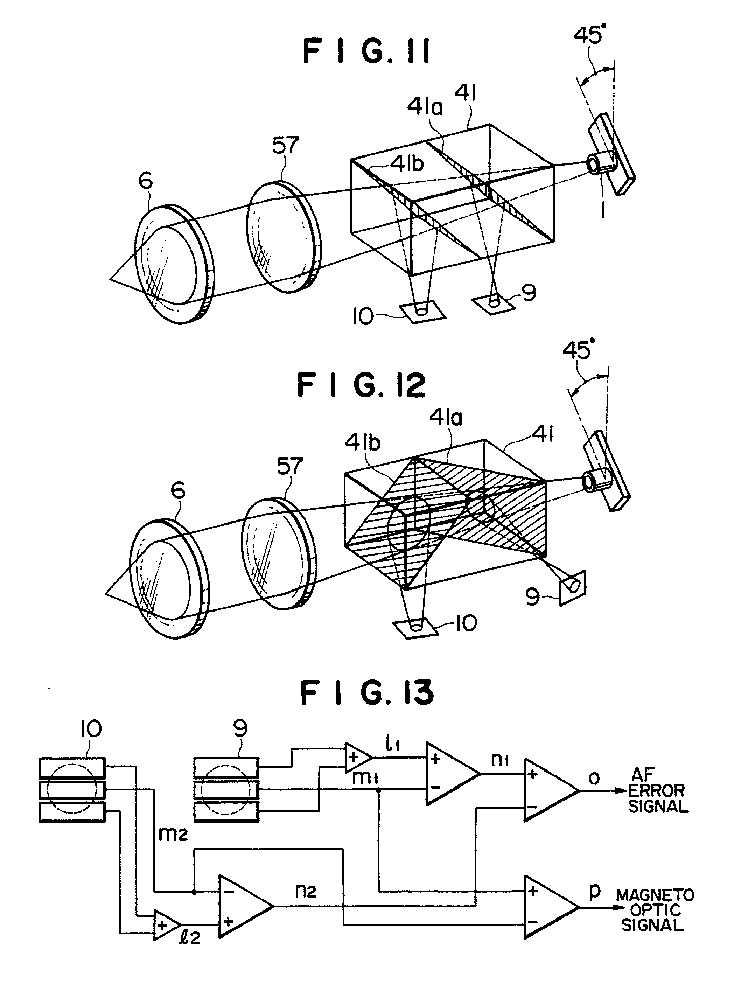

An eighth embodiment of the invention will now be described with reference to Fig. 11 in which the same reference numerals as those shown in Fig. 1 are used to denote the like components or members.

As shown in Fig. 11, the optical pickup according to the eighth embodiment is composed of a composite beam splitter 41 and a collimator lens 57 in order from the light source 1 on the optical path extending from the light source 1 to the objective lens 6. In addition, two detectors 9 and 10 are juxtaposed on one side of the composite beam splitter 41.

The light source 1 is set to that the polarization plate emitted from the light source 1 is rotated at an angle of 45 degrees on the light axis relative to the parallel plane of said composite beam splitter on the polarization plane is unclined at an angle of 45 degrees relative to the upper or lower surface of the composite beam splitter 41, or at an angle of 45 degrees relative to the paper surface of Fig. 11.

The first beam separation surface 41a, disposed closer to the light source 1, of the two beam separation surfaces of the composite beam splitter 41 is made of a reflecting film in which the transparency for p-polarization is 100% and the reflectivity for s-polarization is 50%. Also, the second beam separation surface 41b disposed closer to the collimator lens 57 is made of a reflecting film in which the p-polarization reflectivity is 50% and the s-polarization transparency is 100%. The two beam separation surfaces 41a and 41b are inclined relative to the optical axis but are in parallel with each other.

Fig. 13 shows a signal detection system composed of the above-described two detectors 9 and 10. As shown in Fig. 13, each of the two detectors 9 and 10 is divided into three parts. A differential signal n1 between an addition signal $\ell_1$ of the outer parts of the first detector 9 and a signal representative of the central part of the first detector 9 as well as a differential signal n2 between an addition signal $\ell_2$ of the outer parts of the second detector 10 and a signal representative of the center part of the second detector 10 is picked up. Then, a differential signal (n1-n2) of these signals is picked up to thereby read out the automatic focus error signal. Also, a differential signal (m1-m2) between a signal m1 of the center part of the first detector 9 and a signal m2 representative of the center part of the second detector 10 is picked up to thereby read out the data signal.

The other components are the same as those of the first embodiment. Thus, the explanation therefor will be omitted herein.

In the optical pickup according to the eighth embodiment, the divergent beam flux emitted from the light source 1 is passed through the composite beam splitter 41. Thereafter, the beam is formed in a parallel beam flux by the collimator lens 57 and is focused on the recording surface 11a of the optical recording medium 11 through the objective lens 6.

The reflective beam from the recording surface 11a is returned back to the composite beam splitter 41 through the objective lens 6 and the collimator lens 57. Since the second beam separation surface 41b is adjusted so that the p-polarization reflectivity is at 50% as described above, about 50% of the p-polarization component contained in the reflective beam is reflected by the second beam separation surface 41b and is introduced into the second detector 10. On the other hand, since the first beam separation surface 41a is adjusted so that its s-polarization reflectivity is at 50%, about 50% of the s-polarization component contained in the reflective beam transparent through the second beam separation surface 41b is reflected by the first beam separation surface 41a and is introduced into the first detector 9.

Accordingly, as shown in Fig. 13, by detecting the differential signal of the center portions of the two detectors 9 and 10 each of which is divided into the three parts, it is possible to read out the magnetooptical signal. Also, by forming the signal detection system as shown in Fig. 13, it is possible to ensure a stable automatic focus detection.

As described above, the optical pickup according to the eighth embodiment is applicable to the magnetooptical recording medium driving apparatus. It is apparent that the optical pickup is advantageous in that the miniaturization of the system may be attained because the converging lens and the half mirror may be dispensed with unlike the conventional system.

A ninth embodiment of the invention will now be described with reference to Fig. 12 in which the same reference numerals as those shown in Fig. 1 are used to denote the like components or members.

The optical pickup according to the ninth embodiment is composed of a composite beam splitter 41 and a collimator lens in order from the light source 1 on the optical path of a divergent beam flux extending from the light source 1 to the objective lens 6 in the same manner as in the eighth embodiment.

The difference between the ninth embodiment and the eighth embodiment resides in the structure of the two beam separation surfaces formed in the composite beam splitter 41 and the arrangement of the detectors 9 and 10. More specifically, in the ninth embodiment, the first beam separation surface 41a disposed closer to the light source 1 and the second beam separation surface 41b disposed closer to the collimator lens 57 are each made of a reflecting film such that the p-polarization transparency is 100% and the s-polarization reflectivity is 50%. The two beam separation surfaces 41a and 41b are both inclined at an angle of 45 degrees relative to the optical axis and are perpendicular to each other. The first beam separation surface 41a disposed closer to the light source 1 is formed so that the reflective beam from the optical recording medium 11 is reflected toward the side surface of the composite beam splitter 41, whereas the second beam separation surface 41b disposed closer to the collimator lens 57 is formed so that the reflective beam from the optical recording medium 11 is transmitted downwardly of the composite beam splitter 41.

Accordingly, the first detector 9 is arranged in the lateral or side direction of the composite beam splitter 41 and the second detector 10 is arranged downwardly of the composite beam splitter 41.

The other components are the same as those of the eighth embodiment. Therefore the explanation therefor will be omitted herein.

The optical pickup according to the ninth embodiment has the same effect as that of the optical pickup according to the eighth embodiment.

Although the optical disc driving apparatus is exemplified in the respective embodiments of the invention, the essence of the invention is not limited thereby or thereto. The invention may be applied to any optical recording medium driving apparatus such as an optical card recording medium.

Also, although the driving apparatus for driving the optical recording medium of the rewrite type or the recordable type with the recording medium is exemplified in the respective embodiments of the invention, the invention is applicable also to the driving apparatus for driving the optical recording medium of the reproduction-only type with reflecting layer instead of the recording layer.

Furthermore, although the conventional objective lens, i.e., spherical lens is used in the respective embodiments, it is possible to use an aspherical lens as the objective lens in order to improve the aberration.

As has been described above, since in the optical pickup according to the invention the divergent beam flux is introduced into the objective lens through the composite beam splitter having the two beam separation surfaces, the reflective beam that has been returned back into the composite beam splitter is convergent, to thereby dispense with the convergent lens and half mirror in the reflective optical system. Thus, it is possible to reduce the number of the optical components to reduce the cost and to miniaturize the optical pickup.

Also, since the convergent lens and the half mirror are not needed in the reflective optical system, it is possible to shorten the distance from the composite beam splitter to the detectors. In view of this point, it is possible to make the optical pickup compact.

As described above, according to the present invention, it is possible to provide an optical recording medium driving apparatus that is compact in size and low in cost.

## Claims

1. An optical recording medium driving apparatus having an optical pickup, comprising:
   a light source (1);
   an objective lens for focusing light onto a surface (11) of a recording layer in the recording medium, the surface (11) having an optical reflectivity;
   a beam splitter (41) for separating reflective convergent beam flux; and
   detector means (9, 10) for detecting separated beam of the reflective convergent beam flux;
   wherein two beam separation surfaces of said beam splitter (41) are arranged on an optical path of a divergent beam flux extending from said light source (1) to said objective lens (6); two detectors are arranged corresponding to the respective beam separation surfaces of said beam splitter; and said two detectors are disposed so that a first one of the two separated beams of the reflective convergent beam flux is focused to a point and then diverged before a first one of the detectors (9) and a second one of the two separated beams thereof is converged toward a point behind a second one of the detectors (10).

2. The optical recording medium driving apparatus according to claim 1, further comprising a 1/2 wavelength plate interposed between said two beam separation surfaces of said beam splitter.

3. The optical recording medium driving apparatus according to claim 1, wherein one of said two beam separation surfaces of said beam splitter, disposed closer to said objective lens is smaller in reflectivity than the other of said beam separation surfaces.

4. The optical recording medium driving apparatus according to claim 1, further comprising a collimator lens, said beam splitter including a composite beam splitter where the two beam separation surfaces are formed in different directions, wherein said composite beam splitter and said collimator lens are arranged in order from said light source on the optical path extending from said light source to said objective lens; said composite beam splitter and/or said light source is rotated so that a polarization plane of the light emitted from said light source is rotated at an angle of 45 degrees on the light axis relative to a parallel plane of said composite beam splitter of said composite beam splitter; and said two detectors are separately disposed in confronted relation to the different surfaces of said composite beam splitter.

5. The optical recording medium driving apparatus according to claim 1, further comprising an upwardly reflecting mirror and a 1/4 wavelength, said beam splitter including a composite beam splitter where the two beam separation surfaces are formed in the same direction, wherein said composite splitter, said upwardly reflecting mirror and said 1/4 wavelength plate are arranged in order from said light source on the optical path of a divergent beam extending from said light source to said objective lens; and said two detectors are disposed on one side of said composite beam splitter.

6. The optical recording medium driving apparatus according to claim 1, further comprising a 1/4 wavelength plate, said beam splitter including a composite beam splitter where the two beam separation surfaces are formed in the same direction and a 1/2 wavelength plate is interposed between said two beam separation surfaces, wherein said beam splitter and said 1/4 wavelength plate are arranged in order from said light source on the optical path extending from said light source to the objective lens; and said two detectors are arranged on one side of said composite beam splitter.

7. The optical recording medium driving apparatus according to claim 1, further comprising a 1/4 wavelength plate, said beam splitter including a composite beam splitter where the two beam separation surfaces are formed to define an angle of 90 degrees therebetween, wherein said composite beam splitter and said 1/4 wavelength plate are arranged in order from said light source on the optical path extending from said light source to said objective lens; and the two detectors are arranged on the opposite sides with respect to said composite beam splitter.

8. The optical recording medium driving apparatus according to claim 1, further comprising an upwardly reflecting mirror and a first 1/4 wavelength plate, said beam splitter including a composite beam splitter where the two beam separation surfaces are formed to define an angle of 90 degrees therebetween, wherein said composite beam splitter, said upwardly reflecting mirror and said 1/4 wavelength plate are arranged in order from the light source on the optical path of a divergent beam extending from the light source to the objective lens; said apparatus further comprising a second 1/4 wavelength plate and a reflective mirror both of which are disposed on a reflective optical path of the beam separation surface; and said two detectors are arranged on the opposite side to said second 1/4 wavelength plate and the reflective mirror with respect to said composite beam splitter.

9. The optical recording medium driving apparatus according to claim 1, further comprising a relay lens for reducing astigmatism, said relay lens being disposed on at least one of upstream and downstream sides of said composite beam splitter.

10. The optical recording medium driving apparatus according to claim 1, further comprising a collimator lens and a 1/4 wavelength plate, said beam splitter including a composite beam splitter where the two beam separation surfaces are formed in the same direction, wherein said composite beam splitter, said collimator lens and said 1/4 wavelength plate are arranged in order from the light source on the optical path extending from the light source to the objective lens; and said two detectors are arranged on one side of said composite beam splitter.

11. The optical recording medium driving apparatus according to claim 1, further comprising a collimator lens, said beam splitter including a composite beam splitter where the two beam separation surfaces are formed in the same direction wherein said composite beam splitter and said collimator lens are arranged in order from the light source on the optical path extending from the light source to the objective lens; said light source and/or said composite beam splitter are rotated so that a polarization surface of light emitted from said light source is rotated at an angle of 45 degrees on the light axis with respect to the parallel plane of said composite beam splitter of said composite beam splitter; and said two detectors are arranged on one side of said composite beam splitter.

12. The optical recording medium driving apparatus according to claim 1, wherein said two detectors is formed on a base plate.

13. The optical recording medium driving apparatus according to claim 1, wherein said light source includes a semiconductor laser source.

# F I G. I

# F I G. 2

# F I G. 3

# F I G. 4

# F I G. 5

# F I G. 6

# F I G. 7

# F I G. 8

# F I G. 9

# F I G. 10

17

# F I G. 11

45°

41a
41
41b
57
6

9
10

# F I G. 12

45°

41a
41b
41
57
6

9
10

# F I G. 13

10
9

$l_1$
$m_1$
$n_1$

o AF ERROR SIGNAL

$m_2$

$n_2$

$l_2$

p MAGNETO OPTIC SIGNAL

# F I G. 14

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN vol. 10, no. 149 (P-461)(2206) 30 May 1986, & JP-A-61 003330 (MATSUSHITA DENKI SANGYO K.K.) 9 January 1986, * see the whole document * | 1, 3, 12 | G11B7/09 G11B7/135 G11B11/10 |
| Y | | 2, 6, 10, 13 | |
| Y | | 4, 11 | |
| Y | | 5, 7, 8 | |
| Y | | 9 | |
| | --- | | |
| Y | EP-A-0229035 (VICTOR COMPANY OF JAPAN LTD.) * page 31, paragraph 1; figure 15 * * page 45, line 6 - page 46, line 20 * * figures 15, 17, 22 * | 2, 6, 10, 13 | |
| | --- | | |
| Y | EP-A-0331476 (CANON K.K.) * page 4, line 21 - page 5, line 12 * * figures 3, 4, 5, 6 * | 4, 11 | |
| | --- | | |
| Y | FR-A-2459991 (OLYMPUS OPTICAL CO.) * page 18, line 19 - page 19, line 39 * * page 21, line 25 - page 22, line 8 * * figures 9, 12 * | 5, 7, 8 | TECHNICAL FIELDS SEARCHED (Int. Cl.5)<br><br>G11B |
| | --- | | |
| Y | PATENT ABSTRACTS OF JAPAN vol. 7, no. 231 (P-229)() 13 October 1983, & JP-A-58 120216 (OLYMPUS KOGAKU KOGYO K.K.) 18 July 1983, * see the whole document * | 9 | |
| | ----- | | |

The present search report has been drawn up for all claims

| Place of search | Date of completion of the search | Examiner |
|---|---|---|
| THE HAGUE | 10 MAY 1990 | BARBER I. |

EPO FORM 1503 03.82 (P0401)